# EUROPÄISCHE PATENTSCHRIFT

(11) **EP 1 136 668 B1**
(45) Veröffentlichungstag und Bekanntmachung des Hinweises auf die Patenterteilung: **19.05.2004**
(21) Anmeldenummer: 01105188.5
(22) Anmeldetag: 02.03.2001
(51) Int. Cl.: F01N 3/035, F01N 3/08, B01D 53/32

(54) **Verfahren und Vorrichtung zum Reinigen von Abgas**
Method and device for purifying exhaust gas
Méthode et dispositif pour purifier les gaz d'échappement

(30) Priorität: 02.03.2000 DE 10009730; 02.03.2000 DE 10009731
(43) Veröffentlichungstag der Anmeldung: 26.09.2001
(73) Patentinhaber: Fraunhofer-Gesellschaft zur Förderung der angewandten Forschung e.V., 80686 München (DE); Volkswagen AG, 38436 Wolfsburg (DE)
(72) Erfinder: Pochner,Dipl.-Phys Klaus, 65428 Rüsselheim (DE); Neff,Dr. rer. nat. Willi, 4721 Kelmis (BE); König, Dr. Axel, 38448 Wolfsburg (DE); Richter, Dipl.-Chem. Thomas, 38448 Wolfsburg (DE); Trompeter, Dipl.-Phys. Franz-Josef, 52072 Aachen (DE)
(74) Vertreter: Draudt, Axel Hermann Christian, Dipl.-Ing.

(56) Entgegenhaltungen:
- EP-A- 0 585 047
- DE-A- 19 510 804
- DE-A- 19 645 689
- US-A- 4 780 277
- US-A- 5 310 461
- US-A- 5 711 147
- PATENT ABSTRACTS OF JAPAN vol. 018, no. 164 (M-1579), 18. März 1994 (1994-03-18) & JP 05 332128 A (NAGATOSHI SUZUKI), 14. Dezember 1993 (1993-12-14)
- PATENT ABSTRACTS OF JAPAN vol. 017, no. 443 (M-1463), 16. August 1993 (1993-08-16) & JP 05 098956 A (HITACHI LTD), 20. April 1993 (1993-04-20)
- PATENT ABSTRACTS OF JAPAN vol. 1996, no. 01, 31. Januar 1996 (1996-01-31) & JP 07 247827 A (ISUZU MOTORS LTD), 26. September 1995 (1995-09-26)

## Beschreibung

Die Erfindung bezieht sich auf ein Verfahren mit den Merkmalen des Oberbegriffs des Anspruchs 1.

Verbrennungsmotoren werden mit Katalysatoren betrieben, die Schadstoffe des Abgases abbauen. Eine deutliche Aktivität von Katalysatoren wird bei den heute verwendeten Werkstoffen jedoch erst im Bereich von 250-300° C gefunden. Kaltstarts des Verbrennungsmotors führen daher dazu, daß Schadstoffemissionen praktisch unvermindert in die Umgebung entlassen werden. Die Kaltstartemissionen stellen den überwiegenden Teil der Gesamtemissionen dar, und zwar sowohl bei ihren Ermittlungen in den europäischen Fahrzyklen NEFZ, wie auch in den amerikanischen Fahrzyklen FTP. Für zukünftige direkt einspritzende Ottomotoren wird dieses Problem weiter verschärft, wenn diese Motoren mager betrieben werden und die Abgastemperaturen dementsprechend niedrig sind. Zur Verringerung der Kaltstartemissionen ist es bekannt, Katalysatoren aufzuheizen.

Zur Verbesserung ihres Aufheizverhaltens werden Katalysatoren möglichst nahe am Auslaßkrümmer des Motors angeordnet, was jedoch zu thermischen Problemen bei Vollast führen kann. In einem alternativen Ansatz wurden elektrische Beheizungen oder Brenner mit einigen Kilowatt Heizleistung entwickelt, die durch Zufuhr thermischer Energie das Abgas vor dem Katalysator zusätzlich erwärmen. Darüber hinaus ist es üblich, durch Eingriffe in die Motorsteuerung während des Kaltstarts ein fetteres Gemisch zu fahren, was einerseits in einer Temperaturerhöhung resultiert und andererseits durch die chemische Energie von unverbrannt in den Katalysator gelangenden Bestandteilen des Abgases eine lokale Erwärmung herbeiführt, sobald der Katalysator angesprungen ist. Die Umsetzung eines an unverbrannten Bestandteilen reichen Rohabgases kann durch die Zufuhr von Sauerstoff hinter dem Motor und vor dem Katalysator mittels einer Sekundärluftpumpe unterstützt werden. Nachteil aller beschriebenen Verfahren ist, daß sie alle durch den Strömungswiderstand des meist kleinvolumigen motornahen Katalysators, durch den Energieverbrauch der Zusatzbeheizung oder durch die nichtoptimalen Motorparameter aufgrund der Anfettung den Kraftstoffverbrauch erhöhen. Ein fettes Gemisch oder ein mit Kraftstoff betriebener Brenner führen zudem unmittelbar zu zusätzlichen Emissionen, die aufgrund des im kalten Zustand unwirksamen Katalysators unvermindert in die Umwelt entlassen werden.

Darüber hinaus ist es bekannt, motorische Abgase plasmachemisch zu behandeln. Hierbei werden unter ständiger Zufuhr von elektrischer Energie Elektronen erzeugt, die mittels Elektronenstosses Abgasmoleküle spalten. Dabei werden sowohl Schadstoffmoleküle gespalten, wie auch andere, z. B. atomarer Stickstoff oder Sauerstoff. Spaltprodukte können mit Schadstoffen des Abgases reagieren. Für eine ausschließlich plasmachemische Schadstoffminderung ist der Energieaufwand jedoch vielfach zu hoch. Es ist daher in der DE 196 26 381 C2 bereits beschrieben worden, das plasmachemische Verfahren nicht während der gesamten Betriebsdauer anzuwenden, sondern nur während vorbestimmter Phasen. Dabei wird dieses Verfahren vornehmlich nach dem Kaltstart des Motors eingesetzt, das heißt in der Zeitspanne, in der ein Katalysator noch nicht ausreichend wirksam ist, weil er seine Betriebstemperatur noch nicht erreicht hat. Das plasmachemische Verfahren durch elektrische Gasentladung und die katalytische Abgasbeeinflussung sind jedoch entkoppelt. Es wurde daher versucht, die positiven Wirkungen der elektrischen Gasentladung und des Katalysators zu kombinieren.

Solche Kombinationen sind aus der US-A-4,780,277, der EP-A-0 585 047, der US-A-5,711,147 oder auch der US-A-5,310,461 bekannt. Diese Druckschriften betreffen zwar alle eine Abgas- bzw. Luftreinigungsvorrichtung, bei der vor einem Katalysator eine Aufladung des zu behandelnden Gases erfolgt. Diesen Druckschriften ist dabei allerdings gemein, daß keinerlei Angaben bezüglich des Abstandes zwischen der Aufladungseinrichtung und dem Katalysator angegeben sind. Auch ist keinerlei Hinweis dahin gegeben, welche chemische bzw. physikalische Auswirkung die Aufladung bezüglich der katalytischen Reinigung haben soll. weiterhin bestand das zu lösende Hauptproblem darin, die sogenannte Anspringtemperatur für einen Katalysator mit Hilfe der Aufladung abzusenken.

Aus der DE 44 23 397 C2 ist ein Verfahren mit wesentlichen eingangs genannten Verfahrensschritten bekannt. Es findet innerhalb eines einzigen abgegrenzten Raumes statt, der den Elektrodenraum des Plasmamoduls darstellt, in dem Barrierenentladungen erzeugt werden und in dem auf die aus Dielektrikum bestehenden Barrieren eine katalytische Beschichtung aufgebracht wurde. Die dabei zur Verfügung stehende Elektrodenfläche ist jedoch deutlich kleiner als die aktiven Flächen üblicher Katalysatoren, die eine monolitische keramische Zellenstruktur aufweisen. Die Wirkung dieses bekannten Verfahrens ist verbesserungswürdig.

Der Erfindung liegt daher die Aufgabe zugrunde, ein Verfahren mit den Verfahrensschritten des Oberbegriffs des Anspruchs 1 so zu verbessern, daß der Schadstoffabbau günstig beeinflußt und das Einsetzen katalytischer Wirkung möglichst beschleunigt wird.

Diese Aufgabe wird durch ein Verfahren mit den Merkmalen des Kennzeichens des Anspruchs 1 gelöst.

Für die Erfindung ist zunächst von Bedeutung, daß die elektrische Gasentladung einerseits und die Katalyse andererseits in speziell für sie ausgebildeten Bereichen erfolgen. Diese können entsprechend auf die jeweiligen Prozesse optimiert werden. Dabei ist von Bedeutung, daß das Plasmamodul dem Katalysator strömungsmäßig vorgeordnet verwendet wird. Das erfolgt im Hinblick darauf, daß auch bei dem hier vorliegenden verfahren, wie bei dem bekannten Verfahren, eine für den Schadstoffabbau wirksame Kombination der plasmachemischen Vorgänge im Plasmamodul und der Katalysevorgänge im Katalysator stattfindet. Insbesondere wird ein Effekt erreicht, der mehr als eine Summierung der Wirkung des Plasmas einerseits und der Wirkung des Katalysators andererseits bedeutet. Hierbei wird so verfahren, daß instabil angeregte Gasmoleküle noch vor Ablauf ihrer Abreaktionszeit mit dem Abgas in den Katalysator strömen. Es ist also von Bedeutung, das Plasmamodul und den Katalysator so anzuordnen, daß die instabil angeregten Gasmoleküle aus dem Plasmamodul in den Katalysator gelangen können, bevor sie in stabile Zustände übergehen oder in Reaktionsprodukte zerfallen.

Die vorbeschriebene Optimierung des Schadstoffabbaus wird mit einem Plasmamodul erreicht, in dem eine Barrierenentladung oxidative Reaktionen auslöst, die einen Teil der Schadstoffe abbauen. Bei dem Betrieb des Plasmamoduls entstehen in der Barrierenentladung langlebige oxidative Radikale und reaktive teiloxidierte Schadstoffprodukte, die mit dem Gasstrom aus dem Plasmamodul in den praktisch unmittelbar angrenzenden Katalysator getragen werden. Dabei können die Parameter der elektrischen Gasentladung, die z.B. entsprechend der DE 196 26 381 C2 intermittierend zugeschaltet wird, so gewählt, daß ein möglichst großer Teil der Abreaktionen erst abgeschlossen ist, nachdem das bearbeitete Volumenelement mit dem Abgas in den Katalysator geströmt ist. Die in einem solchen Volumenelement enthaltenen instabil angeregten Gasmoleküle sind Radikale, wie atomarer Sauerstoff oder Stickstoff, metastabiles Ozon oder Reaktionsprodukte der im Abgas enthaltenen Stoffe Wasser, Kohlendioxid, Kohlenmonoxid, Stickoxide, Kohlenwasserstoffe oder Partikel. Es treten elektronische Anregungszustände oder Ionen auf, aber auch vibratorische oder rotatorische Anregungszustände. Die Radikale kommen im Katalysator mit den dort vorhandenen katalytisch wirkenden Oberflächen durch Stöße zur Reaktion. Dabei heizen sie infolge ihrer chemischen Exothermie den Katalysator auf.

Für die Aufheizung des Katalysators ist weiterhin Abwärme vorhanden, die das Abgas aus dem Plasmamodul mitbringt, da hier nicht die gesamte elektrische Energie für die Erzeugung von Radikalen benutzt wird, sondern die Abwärme zu einem beträchtlichen Grad das Abgas aufheizt. Das ist mit einer elektrischen Beheizung vergleichbar, wobei der Wärmeübergang zum Abgas bei einer Barrierenentladung im Bereich von 0,5 - 5 mm aufgrund dieser kleinen Spaltmaße sehr gut ist. Außer den elektrischen Verlusten bei der Plasmaerzeugung dienen auch die o.g. vibratorischen und rotatorischen Anregungszustände der Gasmoleküle einer Aufheizung des Abgases und damit einer Aufheizung des Katalysators. Die Ausnutzung der vorbeschriebenen, vom Plasmamodul herrührenden Effekte bewirkt ein früheres Erreichen der Anspringtemperatur des Katalysators, also derjenigen Temperatur, ab der der Katalysator die Schadstoffe umsetzen kann und dabei seine Temperatur behält bzw. erhöht. Diese Anspringtemperatur wird bei Anwendung des Plasmamoduls bzw. dessen elektrischer Gasentladung durch die erhöhte Reaktivität der Radikale und aufgrund der elektrischen Aufheizung nach dem Kaltstart des Motors früher erreicht als ohne Gasentladung.

Die vorbeschriebenen Wirkungen des erfindungsgemäßen Verfahrens stellen sich auch bei mager betriebenen Verbrennungsmotoren und Verbrennungsmotoren ein, deren Abgas bei stöchiometrischem oder fettem Betrieb durch Zugabe von Sauerstoff netto oxidierend eingestellt wird. Derartiges Abgas, das unabhängig von einem etwa vorhandenen Restsauerstoffgehalt netto oxidierend eingestellt wird, gelangt in ein Plasmamodul, das einem Katalysator in beschriebener Weise strömungsmäßig vorgeordnet ist.

Das Verfahren zum Reinigen von Abgas kann derart weitergebildet werden, das ein Sauerstoff enthaltendes Gas in einer Menge, zugegeben wird, daß das Abgas netto oxidierend ist.

Hierdurch wird beispielsweise das aus stöchiometrischem oder fettem Betrieb des Verbrennungsmotors stammende Abgas durch Zugabe eines geeigneten Gasgemisches wie z.B. Luft netto oxidierend eingestellt, bevor es einer elektrischen Gasentladung unterworfen wird.

Durch eine mengenmäßig gesteuerte Zugabe von sauerstoffhaltigem Gas kann sowohl der plasmachemische Vorgang im Plasmamodul als auch der katalytische Prozeß im Katalysator optimiert werden.

Bei einer weiteren Ausführungsform des Verfahrens ist es vorteilhaft, wenn die elektrische Gasentladung strömungsmäßig in einem solchen Abstand vor dem katalytischen Material erfolgt, daß die instabil angeregten Gasmoleküle mit dem katalytischen Material in Kontakt kommen, da dadurch das an unverbranntem Kraftstoff reiche Abgas abgereichert wird, insbesondere dieser Kraftstoff stark erhitzt wird und verglüht. Diese zusätzliche Wärme erhöht vorteilhafterweise die Katalysatortemperatur. Die Betriebstemperatur wird also schneller erreicht.

Das Verfahren kann so weitergebildet werden, daß als instabil angeregte Gasmoleküle chemische Radikale des sauerstoffhaltigen Abgases, dessen Zersetzungs- oder Reaktionsprodukte im Katalysator verwendet werden, wie es also vorbeschrieben wurde. Dabei ist von Bedeutung, daß auch in der elektrischen Gasentladung entstandene Zersetzungsprodukte und/oder Reaktionsprodukte des Abgases verwendet werden können. Es handelt sich hier um mehratomige Verbindungen oder Partikel, die in dem Plasma nicht instantan völlig zersetzt wurden, sondern in Reaktionsketten schrittweise abgebaut werden. Häufig tritt beispielsweise Wasserstoffabstraktion auf. Die sich ergebenden zwischenprodukte erreichen zumindest zum Teil die Katalysatoroberfläche. Dabei ist von Bedeutung, daß diese Stoffe im Katalysator bereits bei niedrigeren Temperaturen reagieren können, weil sie eine geringere Stabilität haben als ihre nicht angeregten Ausgangsmoleküle. Auch insoweit findet eine Wechselwirkung des Plasmamoduls und des Katalysators statt.

Die vorbeschriebene Wechselwirkung wird insbesondere dann verbessert, wenn das Verfahren so durchgeführt wird, daß eine zwischen dem Plasmamodul und dem Katalysator erfolgende Abgasströmung mit einer solchen Geschwindigkeit erfolgt, daß die instabil angeregten Gasmoleküle den Katalysator während ihrer Instabilitätsdauer erreichen. Dementsprechend wird die Abgasströmung dazu benutzt, instabil angeregte Gasmoleküle möglichst schnell in den Katalysator zu befördern, um dort die vorbeschriebenen Reaktionen zu ermöglichen und damit die Aufheizung des Katalysators.

Vorteilhafterweise wird so verfahren, daß die Gasentladung bis zehn Sekunden vor und spätestens genau mit dem Start des Verbrennungsmotors zugeschaltet wird. Infolgedessen findet gleichzeitig mit dem Start oder sogar kurz vor dem Start des Verbrennungsmotors ein Schadstoffabbau statt und entsprechend der dabei gegebenen Aufheizung des Abgases und der Ausnutzung der instabilen Anregungszustände der Gasmoleküle im Katalysator wird dessen Anspringtemperatur gesenkt. Die schnelle Aufheizung des Katalysators durch die Gasentladung nach den vorbeschriebenen Verfahren wird vorteilhaft zusammen mit den üblichen Maßnahmen eingesetzt, wie einer motornahen Anordnung des Katalysators und einer Sekundärlufteinblasung. Da die sofortige Gasentladung auch noch bei völlig unwirksamem Katalysator Schadstoffe abbaut, kann durch das Verfahren in jedem Betriebszustand des Motors eine Schadstoffminderung erzielt werden.

Es kann auch so verfahren werden, daß die Gasentladung bei einem Erreichen einer durch selbständigen Schadstoffabbau gekennzeichneten Betriebstemperatur des Katalysators abgeschaltet wird. Der Katalysator übernimmt den gesamten Schadstoffabbau. Ein Betrieb des Plasmamoduls ist nicht mehr nötig und die dafür an sich erforderliche Energie wird eingespart.

Das Verfahren kann auch so durchgeführt werden, daß die Gasentladung während des Motorbetriebs bei Unterschreiten einer vorbestimmten Katalysatortemperatur für eine begrenzte Zeit zugeschaltet wird. Das ist insbesondere dann sinnvoll, wenn der Motor eine Betriebsphase mit niedriger Teillast längere Zeit durchläuft, so daß infolgedessen eine Absenkung der Temperatur des Katalysators erfolgt, bei der der vollständige bzw. vorbestimmte Abbau der Schadstoffe nicht mehr gewährleistet ist. Insbesondere kann dann so verfahren werden, daß bei einer Katalysatortemperatur unter 150°C die Einschaltdauer des Plasmamoduls größer als 50% ist. Der Bereich von 250°C bis 300°C ergibt mit den heute verwendeten Werkstoffen eine deutliche Aktivität von Katalysatoren, was ein Verfahren bevorzugen läßt, bei dem bei einer Katalysatortemperatur oberhalb 300°C die Einschaltdauer des Plasmamoduls kleiner als 20 % ist.

In vergleichbarer Weise kann so verfahren werden, daß die Gasentladung während des Motorbetriebs zugeschaltet wird, falls eine Abgaszusammensetzung ermittelt wird, die dem katalytischen Schadstoffabbau abträglich ist. Hierdurch wird vermieden, daß der Katalysator in seiner Funktion gestört wird, beispielsweise durch sich ablagernde Partikel, die den Strömungswiderstand in unzulässiger Weise erhöhen und die wirksame Katalysator-Gesamtfläche verringern.

Eine weitere Verfahrensvariante ist, die Gasentladung während des Motorbetriebs kurzzeitig bei Emissionspeaks zuzuschalten. Solche Emissionspeaks können beispielsweise während des Warmlaufens des Motors oder während einer Laständerung des Motors auftreten, und zwar bei einem Betriebszustand bei oder vor dem die Katalysatortemperatur entweder abgefallen ist oder eine Belastung auftritt, für die der Katalysator nicht ausgelegt ist. Insbesondere ist es dadurch möglich, die Auslegung des Katalysators zu optimieren, also beispielsweise im Hinblick auf seine Größe und/oder auf seine Betriebsdauer.

Das Verfahren kann so durchgeführt werden, daß die elektrische Leistung der Gasentladung so gewählt wird, daß bei einer Umgebungstemperatur von 0°C und einer relativen Luftfeuchte von 50% die Zeit für die Aufheizung der Temperatur des Katalysators am Katalysatoreingang auf 250°C im MVEG-Test gegenüber einem MVEG-Test ohne Gasentladung auf mindestens 80% verkürzt wird. Es ergibt sich eine entsprechende Einsparung an elektrischer Energie, die zur Erzeugung der Gasentladung benötigt wird, und damit die Möglichkeit, die elektrische Anlage des Kraftfahrzeugs zu entlasten bzw. in vorteilhafter Weise schwächer auszulegen.

Im Sinne einer Einsparung elektrischer Energie bei Betrieb der Gasentladung ist es vorteilhaft, so zu verfahren, daß die elektrische Leistung des Plasmamoduls 800 Watt nicht übersteigt und vorzugsweise 200 bis 500 Watt beträgt.

Das Verfahren wird vorteilhafterweise so durchgeführt, daß die Leistung der Gasentladung nach Erreichen einer vorbestimmten Anspringtemperatur während einer vorbestimmten Zeit auf Null zurückgenommen wird. Damit ist es möglich, die Selbsterwärmung des Katalysators durch Schadstoffabbau dazu zu nutzen, daß er sich selbst auf eine höhere als die vorbestimmte Anspringtemperatur erwärmt, bei der er den vorbestimmten Schadstoffabbau ohne Mitwirkung des Plasmamoduls durchführen kann.

Der im Abgasstrang des Verbrennungsmotors angeordnete und aus dem Modul sowie dem Katalysator bestehende Reaktor ist nahe am Motor angeordnet, um Wärmeverluste zu vermeiden und um die Anspringzeit des Katalysators zu minimieren. Wenn mit dem Fahrzeug ein Kaltstart durchgeführt wird, das heißt wenn ein Fahrer den Anlasser betätigt, so werden die folgenden Verfahrensschritte von der Motorsteuerung oder anderen Steuergeräten veranlaßt: Die Zündung, die Kraftstoffzufuhr, sowie die elektrische Versorgung des Plasmamoduls werden während der ersten Motorumdrehung eingeschaltet, nämlich sobald ein Gasdurchsatz im Plasmamodul auftritt. Die Motorsteuerung wirkt so, daß sich eine hohe Abgastemperatur einstellt. Zusätzlich kann eine Sekundärluftpumpe eingeschaltet werden, um im Hinblick auf Rundlauf und/oder Wanddesorption betriebsbedingt fettes Abgas mit Sauerstoff anzureichern. Eine Prozeßführung kann auch so erfolgen, daß das Plasmamodul etwas früher oder etwas später als die erste Motorumdrehung eingeschaltet wird.

Die elektrische Leistung beim Betrieb des Plasmamoduls sollte so gewählt sein, daß hierin während der Aufheizzeit des Katalysators ein signifikanter, aber nicht zu großer Anteil abgebaut wird. Denn bei einem größeren Abbau der im Rohabgas vorhandenen Schadstoffe von zum Beispiel über 50% sinkt der spezifische Wirkungsgrad, das heißt der Energieaufwand pro plasmachemisch abgebautem Molekül. Eine Optimierung der elektrischen Leistung erfolgt so, daß eine erhebliche Verkürzung der Anspringzeit des Katalysators resultiert. Die für übliche PKW-Motoren erforderliche Leistung liegt typischerweise bei einigen hundert Watt, also deutlich unter derjenigen Leistung, die für einen elektrisch beheizten Katalysator erforderlich ist. Die während der Anschaltzeit des Plasmamoduls insgesamt verbrauchte Energie kann darüber hinaus weiter minimiert werden, wenn die elektrische Leistung an die momentane Schadstoffkonzentration und an den Abgasvolumenstrom angepaßt wird.

Aus den vorgenannten Gründen ist es daher zweckmäßig, den Eintrag an elektrischer Leistung in das Abgas zur Optimierung des Plasmamodul/Katalysator Systems selbstregelnd zu gestalten.

Das im Plasmamodul während der Gasentladung zusätzlich erwärmte und mit instabil angeregten Gasmolekülen angereicherte Abgas strömt vom Plasmamodul auf kurzem Weg zum Katalysator. Dieser wird von der Abgaswärme und infolge der exotherm ablaufenden Reaktionen innerhalb einiger zehn Sekunden auf die Anspringtemperatur für nicht durch Barrierenentladung vorbehandeltes Abgas aufgeheizt. Es setzt dann katalytische Aktivität ein, bei der Sauerstoff- und Stickoxidmoleküle dissoziativ am Edelmetallkontakt adsorbieren, was erst oberhalb einer Temperatur von 200-250° C möglich ist. Unter weiterer Energiezufuhr, zum Beispiel durch Übertragung von der heißen Katalysatorwand, kann gebildeter atomarer Sauerstoff mit Schadstoffen reagieren, wie Kohlenmonoxid oder Rußpartikel. Bei abgeschaltetem Plasma laufen nur diese temperaturabhängigen Reaktionen ab.

Bei angeschaltetem Plasma wird zusätzlich ein Teil der Schadstoffe bereits in der Gasentladung gespalten, der Katalysator wird also nur von einer geringeren Schadstoffkonzentration erreicht. Ferner werden atomarer Sauerstoff oder metastabiles Ozon in die Poren des Katalysators transportiert, wo sie bei Stößen mit der Wand unter Bildung atomaren Sauerstoffs erneut zerfallen. Die Sauerstoffspaltung findet also nicht nur am Katalysatormetall bei hohen Temperaturen statt, vielmehr können oxidative Reaktionen aufgrund von im Plasma gespaltenen Sauerstoffs bereits bei niedrigeren Temperaturen einsetzen. Dieser Prozeß gewinnt um so mehr an Bedeutung, je mehr Sauerstoff sich im Abgas befindet und läuft auch bei fettem Motorbetrieb dann ab, wenn eine Sekundärluftpumpe eingesetzt wird. Nach einer ersten Anheizphase sind hinter dem Reaktor zumindest die Kohlenwasserstoffe vollständig abgebaut.

In einer dritten Phase hat der Katalysator schließlich seine Arbeitstemperatur erreicht, und die Gasentladung kann zur Einsparung von Energie abgeschaltet werden. Der exakte Leistungsverlauf und die Betriebsdauer der Entladung hängt von der Verfügbarkeit an Energie aus Batterie oder Lichtmaschine ab und muß bezüglich Kraftstoffverbrauch und Schadstoffminderung optimiert werden. In späteren auch instationären Betriebsphasen des Motors steht in der Regel ausreichend Leistung von der Lichtmaschine zur Verfügung und durch kurzzeitiges Zuschalten des Plasmareaktors können eventuell auftretende Emissionsspitzen abgefangen werden. Je nach Erfordernis kann auch nach einer niedriegen Teillast- beziehungsweise Leerlaufphase des Motors das erneute Anspringen des Katalysators durch Zuschalten des Plasmas erleichtert werden.

Bei den vorbeschriebenen Verfahren wird mit den vorgenannten Verfahrensschritten erreicht, die Wirkung des Plasmamoduls und des Katalysators zu kombinieren. Es ergibt sich eine Steigerung der Wirksamkeit des Verfahrens in dem Sinne, daß die Zeit bis zum Einsetzen der katalytischen Wirkung, also die Anspringzeit, verringert wird, wie auch die Anspringtemperatur, also die Temperatur, bei der die katalytische Wirkung einsetzt.

Das Verfahren zum Reinigen von Abgas, insbesondere Abgas von Verbrennungsmotoren, kann vorteilhafter Weise derart ausgestattet werden, daß die elektrische Gasentladung im Sinne einer instabilen Anregung eines vorbestimmten Anteils von Kohlenwasserstoffmolekülen durchgeführt wird. Hierbei ist ein die elektrische Gasentladung bewirkendes Plasmamodul einem das katalytische Material aufweisenden Katalysator in einem solchen Abstand strömungsmäßig vorgeordnet, daß instabil angeregte Gasmoleküle mit dem Abgas in den Katalysator strömen.

Dem vorgenannten Verfahren liegt die Erkenntnis zugrunde, daß insbesondere eine instabile Anregung von Kohlenwasserstoffmolekülen dazu führt, das Gesamtverfahren zum Reinigen von Abgas zu optimieren. Vor allem auf den Anteil der Kohlenwasserstoffmoleküle im Abgas nimmt die elektrische Gasentladung einen solchen Einfluß, daß bereits zum Zeitpunkt des Beginns der Barrierenentladung ein wesentlicher direkter Abbau stattfindet, z.B. etwa auf die Hälfte der Rohkonzentration. Wenn hierbei auf eine Konzentration von Kohlenwasserstoffen Bezug genommen wird, so ist das mit üblichen Verfahren, wie z.B. der Flammenionisation, bestimmte C₃H₈-Äquivalent gemeint, bei dem die verschiedenen auftretenden Kohlenwasserstoffmoleküle in etwa nach der Zahl der enthaltenen Kohlenstoffatome gewichtet werden.

Um die Kombinationswirkung im Sinne einer Optimierung der Wirksamkeit des Reinigungsverfahrens zu optimieren, wird so verfahren, daß der vorbestimmte Anteil weniger als 70% der gesamten Kohlenwasserstoffe des Abgases ist. Es genügt also, mit der elektrischen Gasentladung weniger als 70% der gesamten Kohlenwasserstoffe des Abgases abzubauen, um mit dem Katalysator einen Restabbau auf praktisch Null zu erreichen. Wird nun bei einem plasmachemischen Abbau nur ein Teil der Kohlenwasserstoffe abgebaut, so können einerseits manche Moleküle vollständig zu CO₂ und H₂O oxidiert worden sein und andererseits auch Moleküle teilweise oxidiert, d.h. in andere Kohlenwasserstoffmoleküle umgewandelt worden sein. Aus gesättigten Kohlenwasserstoffen (Paraffinen) werden so Olefine und Aromate mit einem höheren C/H-Verhältnis oder sauerstoffhaltige Aldehyde, Alkohole, Ether und Ketone.

Eine weitere Vervollkommung des Verfahrens wird dadurch erreicht, daß die elektrische Gasentladung im Sinne einer Anregung von ungesättigten Kohlenwasserstoffmolekülen, d.h. mit mindestens einer Doppelbindung zweier Kohlenstoffatome (Olefine) gesteuert wird. Die beschriebene Doppelbindung wird z.B. durch Wasserstoffabstraktion gebildet. Die metastabil angeregten Kohlenwasserstoffmoleküle mit Doppelbindung zweier Kohlenstoffatome haben eine ausreichend lange Lebensdauer, um im Katalysator eine erhöhte Reaktivität zur Wirkung zu bringen, mit der die Anspringtemperatur des Katalysators gesenkt werden kann. Der Energiemehraufwand für dieses Verfahren ist wegen der zusätzlichen Absenkung der Anspringtemperatur durch die metastabil angeregten Gasmoleküle geringer, als mit einem elektrisch beheizten Katalysator, bei dem nur die Aufheizzeit abgesenkt werden kann, nicht aber die Anspringtemperatur.

Das Verfahren kann vorteilhafter Weise so durchgeführt werden, daß die elektrische Gasentladung im Sinne eines Abbaus eines vorbestimmten Schadstoffanteils durchgeführt wird, wobei ein hoher Anteil instabiler Moleküle aus unvollständiger Zersetzung gebildet wird. Infolgedessen ist es möglich, von allen Schadstoffen nur einen vorbestimmten Anteil abzubauen, und zwar derart, daß sich ein hoher Anteil instabiler Moleküle ergibt. Durch Vorbestimmung des Schadstoffanteils kann das Verfahren im Sinne der Optimierung gemäß obiger Aufgabenstellung durchgeführt werden.

Des weiteren kann es vorteilhaft sein, das Verfahren so durchzuführen, daß die elektrische Gasentladung einen hohen Anteil solcher Kohlenwasserstoffmoleküle und -radikale im Abgas erzeugt, die eine niedrigere Anspringtemperatur für eine katalytische Umsetzung besitzen, als Kohlenmonoxid oder als der restliche Abgasanteil. Es findet eine Auswahl unter den Kohlenwasserstoffen statt, um die oben für Kohlenwasserstoffe allgemein beschriebene Optimierung weiter zu verfeinern.

Für Verfahren zum Reinigen von Abgas mit einem einem Katalysator strömungsmäßig vorgeordneten Plasmamodul ist es zu bevorzugen, wenn ein Katalysator mit einer niedrigen Anspringtemperatur für ungesättigte oder teiloxidierte Kohlenwasserstoffe verwendet wird. Hierdurch wird auch eine katalysatorseitige Anpassung des Verfahrens im Sinne einer Optimierung der Abgasreinigung erreicht.

Die Erfindung bezieht sich auch auf eine Vorrichtung zum Reinigen von Abgas, insbesondere Abgas von Verbrennungsmotoren, mit einem Abgasstrang, in dem ein das Abgas einer elektrischen Gasentladung unterwerfendes Plasmamodul und ein Katalysator vorhanden sind, in dem das Abgas in Kontakt mit katalytischem Material gelangt. Eine solche Vorrichtung ist aus der DE 196 26 381 C2 bekannt und für die Vorrichtung gelten grundsätzlich die oben hierzu beschriebenen Nachteile. Insbesondere ist das bekannte Plasmamodul dem Katalysator nachgeordnet. Es ist also mit Sicherheit keine Kombinationswirkung in dem Sinne möglich, daß Wirkungen des Plasmamoduls positiven Einfluß auf den Katalysatorbetrieb hätten.

Die oben dargelegte Aufgabe wird daher bei dieser Vorrichtung erfindungsgemäß gelöst durch ein Plasmamodul im Abgasstrang in einem Abstand strömungsmäßig vor dem Katalysator angeordnet ist, der es gestattet, daß von der Gasentladung instabil angeregte Gasmoleküle in den Katalysator gelangen.

Von besonderer Bedeutung ist es, daß das Plasmamodul dem Katalysator in einem Abstand vorgeordnet ist, der es gestattet, daß von der Gasentladung instabil angeregte Gasmoleküle in den Katalysator gelangen. Dadurch gelangen instabil angeregte Gasmoleküle vor Ablauf ihrer Abreaktionszeit in den Katalysator, wo sie an den katalytisch wirkenden Oberflächen exotherm abreagieren. Es erfolgt überraschenderweise ein schnelleres Erreichen der Anspringtemperatur des Katalysators als durch elektrische Beheizung mit gleicher Leistung und damit eine unerwartete Verbesserung bei einem Abbau von Schadstoffen des Abgases. Außerdem lassen sich instabile Gasmoleküle dazu ausnutzen, die Anspringtemperatur des Katalysators in beschriebener Weise abzusenken.

Die Vorrichtung kann so ausgestaltet sein, daß der Katalysator einen mit Edelmetall beschichteten wabenförmigen keramischen Träger aufweist. In diesem Fall kann ein handelsüblicher, z.B. mit Platin oder anderen Edelmetallen beschichteter Katalysator eingesetzt werden, mit dem das Plasmamodul zusammenwirkt. Bewährte Katalysatortechnik führt dazu, daß die erforderliche Katalysatorwirkung garantiert werden kann, zugleich aber ein aus diesem Katalysator und aus einem Plasmamodul generierter Reaktor preiswert herzustellen ist.

Eine weitere Verbesserung der Vorrichtung ergibt sich dadurch, daß das Plasmamodul und der Katalysator einen als Baueinheit ausgebildeten Reaktor darstellen, der im Abgasstrang nahe am Motor angeordnet ist. Die Anordnung des Reaktors nahe am Motor gewährleistet eine optimale Ausnutzung der Abgastemperatur. Konstruktions- und Montageaufwand werden klein gehalten, da Plasmamodul und Katalysator eine Baueinheit bilden. Dementsprechend ist auch der Platzbedarf gering.

Die Erfindung wird anhand einer in der Zeichnung dargestellten Vorrichtung und ebenfalls dargestellten Diagrammen erläutert. Es zeigt:
- Fig.1: eine schematisierte Vorrichtung,
- Fig.2 a-c: zeitliche Verläufe wichtiger Parameter des Verfahrens,
- Fig.3: zeigt eine zeitliche Abhängigkeit des Verlaufs der Konzentration von Kohlenwasserstoffen, und
- Fig.4: zeigt den Verlauf der Konzentration von Kohlenmonoxid in zeitlicher Abhängigkeit.

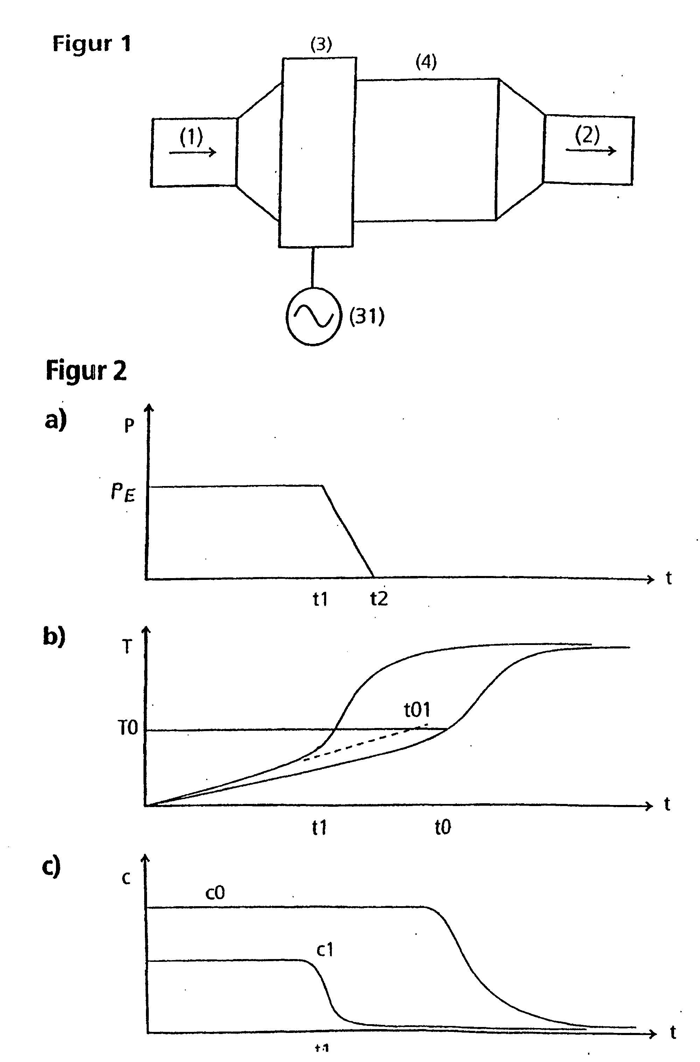

Fig.1 zeigt eine Anordnung eines Plasmamoduls 3 und eines Katalysators 4 in einem Abgasstrang 1,2 eines nicht dargestellten Verbrennungsmotors. Das Plasmamodul 3 ist an ein elektrisches Vorschaltgerät 31 angeschlossen, das bei Bedarf eine zur Erzeugung einer Barrierenentladung erforderliche hochfrequente Hochspannung erzeugt. Das Vorschaltgerät 31 bezieht seine Leistung aus dem Bordnetz eines Kraftfahrzeugs, und zwar je nach Ladezustand der Batterie und momentaner Motorleistung aus der Lichtmaschine, der Batterie oder aus beiden. Das Vorschaltgerät verfügt über Schnittstellen zu einem zentralen Steuergerät, zum Beispiel der Motorsteuerung, von dem es instantan an- und abgeschaltet werden kann und von dem auch die elektrische Leistung bedarfsweise geregelt werden kann.

Fig. 2a zeigt schematisch den Verlauf der elektrischen Leistung P über der Zeit t für den Betrieb der elektrischen Gasentladung. Fig. 2b zeigt den Verlauf der Temperatur T im Bereich des Katalysators über der Zeit t. Fig.2c zeigt schematisch den Verlauf von Schadstoffkonzentrationen c über der Zeit t.

Zum Zeitpunkt t=0 wird eine vorbestimmte elektrische Leistung P_{E} zum Betrieb der elektrischen Gasentladung eingeschaltet und bis zum Zeitpunkt t1 beibehalten. Danach wird die elektrische Leistung bis zum Zeitpunkt t2 auf Null zurückgenommen.

Würde man einen Motorbetrieb ohne Ansteuerung eines Plasmamoduls 3 durchführen, so würde die Temperatur T dem Verlauf der unteren Kurve folgen. Nach einer Zeit t0 würde die Anspringtemperatur T0 des Katalysators 4 erreicht werden. Dementsprechend würde der Katalysator wirken und aufgrund der exothermen Umsetzung im Katalysator ein steilerer Temperaturanstieg erfolgen. Eine Schadstoffkonzentration c0 würde vom Zeitpunkt t0 entsprechend der Darstellung in Fig. 2c absinken.

Geht man davon aus, daß mit der Gasentladung eine der Leistung P_{E} entsprechende Wärme ins Abgas eingebracht wird, so steigt die Temperatur steiler an, nämlich entsprechend der gestrichelten Darstellung. Infolgedessen wird die Anspringtemperatur T0 bereits zum Zeitpunkt t01 erreicht. Diese Darstellung entspricht grundsätzlich der Anwendung einer elektrischen Beheizung des Katalysators, wobei allerdings eine mehreren Kilowatt entsprechende Wärme ins Abgas eingekoppelt wird, so daß sich ein größerer Unterschied in den Zeiten t0 und t01 ergibt, als es in Fig. 2b dargestellt wird.

Bei der Anwendung einer elektrischen Gasentladung im Bereich einiger hundert Watt wird eine Barrierenentladung durchgeführt, so daß die Aufheizkurve der Temperatur T definitionsgemäß ebenfalls dem steileren Verlauf entsprechend der gestrichelten Darstellung folgt. Infolge dieser elektrischen Gasentladung wird die Schadstoffkonzentration c hinter dem Plasmamodul 3 bzw. im Katalysator 4 um einen leistungsabhängigen Anteil von c0 auf c1 verringert. Die Anspringtemperatur T0 wird bereits zu einem früheren Zeitpunkt t1 erreicht. Von diesem Zeitpunkt ab ist der Katalysator wirksam und die Schadstoffkonzentration c1 fällt auf null bzw. auf einen sehr geringen Wert ab. Die Gasentladung bleibt noch eine kurze Zeit t2-t1 angeschaltet, wobei jedoch die Leistung P gemäß Fig. 2a bereits vermindert werden kann.

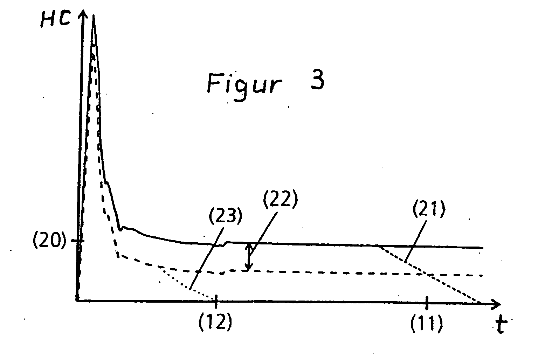

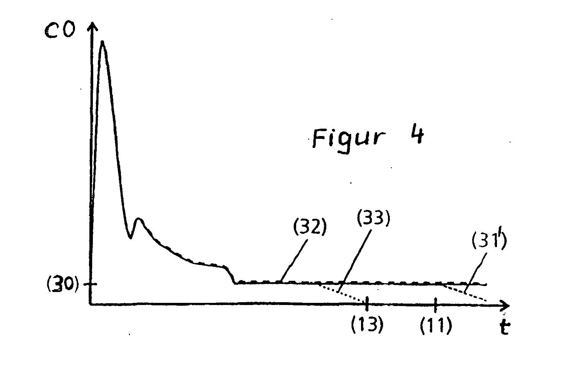

In beiden Fig.3,4 ist die Zeit t über die X-Achse dargestellt. Die Y-Achse zeigt in Fig.3 die Konzentration von Kohlenwasserstoffen HC und in Fig.4 die Konzentration von Kohlenmonoxid CO. Bei beiden Schadstoffen ergibt sich nach dem Motorstart zunächst ein erster Berg, nach dem sich ein im wesentlichen zeitlich konstanter Wert 20 bzw. 30 einstellt, falls ohne Katalysator und ohne Plasma verfahren wird.

Wenn ein Katalysator verwendet wird, überschreitet dieser nach seinem Aufheizen durch das Abgas zu einem bestimmten Zeitpunkt 11 bzw. t₀ eine Anspringtemperatur T₀. Die dann einsetzende katalytische Wirkung führt dazu, daß die Konzentration der Kohlenwasserstoffe HC und die Konzentration des Kohlenmonoxids CO entsprechend den dargestellten Verläufen 21 und 31' auf Null abgebaut wird.

Es ist nun festgestellt worden, daß die elektrische Gasentladung, sofern ein Verfahren unter Verwendung dieser elektrischen Gasentladungen, aber ohne Einsatz eines Katalysators durchgeführt wird, die Konzentration von Kohlenwasserstoffen um eine etwa konstante Differenz 22 zu mindern vermag, wenn das Plasma während der Zeit t zugeschaltet bleibt.

Im Vergleich dazu bleibt die Konzentration von Kohlenmonoxid CO im Rahmen der Meßgenauigkeit unbeeinflußt, wie der Kurvenverlauf 32 zeigt. Aus dem Kurvenverlauf ist zu ersehen, daß ein vollständiger Abbau der Schadstoffe des Abgases ohne Katalysator zu keinem Zeitpunkt erreicht wird. Auch bei Einsatz eines Katalysators zusammen mit einer Gasentladung ist zu erwarten, daß ein vollständiger Abbau von Schadstoffen im Abgas nicht vor dem Zeitpunkt 11 bzw. t₀ herbeigeführt werden kann.

Es wurde angestrebt, mittels eines kombinierten Verfahrens, also einer instabilen Anregung eines vorbestimmten Anteils von Kohlenwasserstoffmolekülen mittels elektrischer Gasentladung und katalytischer Reinigung, Einfluß auf den Anspringzeitpunkt eines Katalysators zum Abbau von Schadstoffen zu nehmen. Kohlenmonoxid CO nimmt bereits zum Zeitpunkt 13 gemäß Verlauf 33 den Wert Null an, während HC zu einem noch früheren Zeitpunkt 12 gemäß Verlauf 23 den Wert Null annimmt. Nach der Zeit 13 wird die Gasentladung nicht mehr benötigt, um die Schadstoffe vollständig abzubauen. Überraschenderweise führt die Anregung von Kohlenwasserstoffmolekülen zu einem früheren Anspringen der katalytischen Wirkung für Kohlenwasserstoffe. Der Katalysator hat jedoch noch nicht die ohne Plasma erforderliche Anspringtemperatur erreicht. Hinter dem Katalysator wird daher noch eine signifikante CO-Konzentration gemessen. Auch wäre der Katalysator im Falle eines Abschaltens des Plasmas nicht aktiv, d.h. auch Kohlenwasserstoffe würden wieder emittiert. In dieser zweiten Phase kann die elektrische Leistung für die Gasentladung jedoch bereits heruntergeregelt werden. Denn die Aufheizung des Katalysators schreitet dennoch aufgrund der Wärmezufuhr des heißen Abgases vom Motor und aufgrund der Reaktionswärme beim Schadstoffabbau fort. Würde man die elektrische Gasentladung zwischen den Zeiten 12 und 13 abschalten, so käme es zu einem erneuten Anstieg von Kohlenwasserstoff HC auf den Wert 20 der Rohkonzentration, d.h. wie mit dem Katalysator alleine.

Bei den vorausgegangenen Darlegungen wurde vorausgesetzt, daß ein Plasmamodul zur Erzeugung einer Barrierenentladung eingesetzt wird, wie auch ein Katalysator mit einem mit Edelmetall beschichteten wabenförmigen keramischen Träger. Das Plasmamodul ist dem Katalysator strömungsmäßig vorgeordnet und beide haben eine solchen geringen Abstand voneinander, daß instabil angeregte Gasmoleküle aus dem Plasmamodul mit dem Abgas in den Katalysator strömen, dabei also ihren Anregungszustand nicht außerhalb des Katalysators verlieren, sondern erst im Zusammenwirken mit Bauteilen des Katalysators.

Mißt man die Schadstoffemission bei der vorbeschriebenen Anordnung, jedoch mit abgeschalteter Hochspannungsversorgung des Plasmamoduls, so findet man zu Beginn unmittelbar nach dem Kaltstart des Motors einen Schadstoffverlauf, der im wesentlichen mit der Rohemission des Motors übereinstimmt. Die Adsorption und die Desorption im Katalysator verursachen gewisse zeitliche Verschiebungen in den Signalen vor dem Plasmamodul und hinter dem Katalysator. Es ergeben sich jedoch in den ersten Minuten im wesentlichen identische Schadstoffmassen für Kohlenmonoxid CO und Kohlenwasserstoffe HC. Erst nach einer von der Motorlast abhängigen Zeit t₀ beginnen die nach dem Katalysator gemessenen Konzentrationen der Schadstoffe gegenüber der Rohemission abzufallen. Nach der Zeit t₀ hat zumindest ein Teil des Katalysators die Anspringtemperatur überschritten und der Schadstoffabbau nimmt bei fortschreitender Aufheizung des Katalysators durch die Abgase weiter zu.

Wird der vorbeschriebene Kaltstart des Motors mit der gleichen Motorlast durchgeführt, zusätzlich jedoch mit einer elektrischen Gasentladung, die als Barrierenentladung mit einer elektrischen Leistung von einigen hundert Watt und in der vorbeschriebenen räumlich nahen Zuordnung des Plasmamoduls und des Katalysators betrieben wird, so ergeben die hinter dem Katalysator erfolgenden Messungen geringere Schadstoffwerte. Die CO-Konzentration beginnt gegenüber der Rohemission bereits nach einer Zeit t₁ bzw. 13 abzufallen, die bis zur Hälfte der Anspringzeit t₀ bei abgeschalteter Gasentladung beträgt. Ein ähnliches Verhalten könnte auch durch elektrische Beheizung des Katalysators mit entsprechender Leistung von einigen hundert Watt erreicht werden.

Überraschend ist jedoch, daß die Konzentration der Kohlenwasserstoffe HC nach einer Zeit t₂ bzw. 12 auf Null gefallen ist, die deutlich kürzer ist, als es der Anspringzeit t₀ entspricht. Das ist deswegen überraschend, weil eine Messung der Kohlenwasserstoffkonzentration hinter der Gasentladung jedoch vor dem Katalysator ergibt, daß bei gleichen Bedingungen nur ein Abbau der Kohlenwasserstoffe auf etwa die Hälfte der Rohkonzentration stattgefunden hat. Es ist also lediglich ein vorbestimmter Anteil von weniger als 70% der gesamten Kohlenwasserstoffe des Abgases durch die elektrische Gasentladung direkt abgebaut worden.

Obwohl die Summe des Abbaus von Schadstoffen durch die Barrierenentladung und den Katalysator gemäß den einzelnen Messungen vor dem Anspringen des Katalysators wesentlich geringer ist, ergibt sich durch das vorbeschriebene Verfahren mit wirkungsmäßiger Kopplung des Plasmamoduls und des Katalysators in Hintereinanderschaltung eine Wirkungsgradsteigerung. Das Verfahren beschleunigt nicht nur die Aufheizung des Katalysators durch thermische Energie im Plasmamodul, sondern es erfolgt auch eine Aktivierung insbesondere der Kohlenwasserstoffmoleküle, so daß eine katalytische Umsetzung von Abgas bereits bei deutlich niedrigeren Temperaturen stattfindet. Die Anspringtemperatur des Katalysators wird überraschenderweise gesenkt.

## Patentansprüche

1. Verfahren zum Reinigen von Abgas, insbesondere sauerstoffhaltigem Abgas von mager betriebenen Verbrennungsmotoren und Verbrennungsmotoren, deren Abgas bei stöchiometrischem oder fettem Betrieb durch Zugabe von Sauerstoff netto oxidierend eingestellt wird, das einer elektrischen Gasentladung unterworfen wird und in Kontakt mit katalytischem Material gelangt, **dadurch gekennzeichnet, daß** ein die elektrische Gasentladung bewirkendes Plasmamodul (3) einem das katalytische Material aufweisenden Katalysator (4) in einem solchen Abstand strömungsmäßig vorgeordnet verwendet wird, daß instabil angeregte Gasmoleküle mit dem Abgas in den Katalysator (4) strömen.

2. Verfahren nach Anspruch 1 **dadurch gekennzeichnet, daß** ein Sauerstoff enthaltendes Gas in einer Menge zugegeben wird, daß das Abgas netto oxidierend ist.

3. Verfahren nach Anspruch 1 oder 2, **dadurch gekennzeichnet, daß** die instabil angeregten Gasmoleküle mit dem katalytisch wirksamen Material in Kontakt kommen.

4. Verfahren nach einem der Ansprüche 1 bis 3, **dadurch gekennzeichnet, daß** als instabil angeregte Gasmoleküle chemische Radikale des sauerstoffhaltigen Abgases, dessen Zersetzungs- oder Reaktionsprodukte im Katalysator (4) verwendet werden.

5. Verfahren nach einem der vorhergehenden Ansprüche 1 bis 4, **dadurch gekennzeichnet, daß** eine zwischen dem Plasmamodul (3) und dem Katalysator (4) erfolgende' Abgasströmung mit einer solchen Geschwindigkeit erfolgt, daß die instabil angeregten Gasmoleküle den Katalysator (4) während ihrer Instabilitätsdauer erreichen.

6. Verfahren nach einem der vorhergehenden Ansprüche 1 bis 5, **dadurch gekennzeichnet, daß** die Gasentladung bis zehn Sekunden vor und spätestens genau mit dem Start des Verbrennungsmotors zugeschaltet wird.

7. Verfahren nach einem der vorhergehenden Ansprüche 1 bis 6, **dadurch gekennzeichnet, daß** die Gasentladung bei einem Erreichen einer durch selbständigen Schadstoffabbau gekennzeichneten Betriebstemperatur des Katalysators (4) abgeschaltet wird.

8. Verfahren nach einem der vorhergehenden Ansprüche 1 bis 7, **dadurch gekennzeichnet, daß** bei einer Katalysatortemperatur unter 150°C die Einschaltdauer des Plasmamoduls (3) größer als 50% ist.

9. Verfahren nach einem der vorhergehenden Ansprüche 1 bis 8, **dadurch gekennzeichnet, daß** bei einer Katalysatortemperatur oberhalb 300°C die Einschaltdauer des Plasmamoduls (3) kleiner als 20 % ist.

10. Verfahren nach einem der vorhergehenden Ansprüche 1 bis 9, **dadurch gekennzeichnet, daß** die Gasentladung während des Motorbetriebs zugeschaltet wird, falls eine Abgaszusammensetzung ermittelt wird, die dem katalytischen Schadstoffabbau abträglich ist.

11. Verfahren nach einem der vorhergehenden Ansprüche 1 bis 10, **dadurch gekennzeichnet, daß** die Gasentladung während des Motorbetriebs bei Emissionspeaks zugeschaltet wird.

12. Verfahren nach einem der vorhergehenden Ansprüche 1 bis 11, **dadurch gekennzeichnet, daß** die elektrische Leistung der Gasentladung so gewählt wird, daß bei einer Umgebungstemperatur von 0°C und einer relativen Luftfeuchte von 50% die Zeit für die Aufheizung der Temperatur des Katalysators (4) am Katalysatoreingang auf 250°C im MVEG-Test gegenüber einem MVEG-Test ohne Gasentladung auf mindestens 80% verkürzt wird.

13. Verfahren nach einem der vorhergehenden Ansprüche 1 bis 12, **dadurch gekennzeichnet, daß** die elektrische Leistung des Plasmamoduls (3) 800 Watt nicht übersteigt und vorzugsweise 200 bis 500 Watt beträgt.

14. Verfahren nach einem der vorhergehenden Ansprüche 1 bis 13, **dadurch gekennzeichnet, daß** die Leistung der Gasentladung nach Erreichen einer vorbestimmten Anspringtemperatur (T0) während einer vorbestimmten Zeit (t₂-t₁) auf Null zurückgenommen wird.

15. Verfahren nach einem der vorhergehenden Ansprüche 1 bis 14, **dadurch gekennzeichnet, daß** die elektrische Gasentladung im Sinne einer instabilen Anregung eines vorbestimmten Anteils von Kohlenwasserstoffmolekülen durchgeführt wird.

16. Verfahren nach Anspruch 15, **dadurch gekennzeichnet, daß** der vorbestimmte Anteil weniger als 70% der gesamten Kohlenwasserstoffmoleküle des Abgases sind.

17. Verfahren nach Anspruch 15 oder 16, **dadurch gekennzeichnet, daß** die elektrische Gasentladung im Sinne einer Anregung von Kohlenwasserstoffmolekülen mit mindestens einer Doppelbindung zweier Kohlenstoffatome gesteuert wird.

18. Verfahren zum Reinigen von Abgas, insbesondere nach Anspruch 15, **dadurch gekennzeichnet, daß** die elektrische Gasentladung im Sinne eines Abbaus eines vorbestimmten Schadstoffanteils durchgeführt wird, wobei ein hoher Anteil instabiler Moleküle aus unvollständiger Zersetzung gebildet wird.

19. Verfahren nach einem der Ansprüche 14 bis 18, **dadurch gekennzeichnet, daß** die elektrische Gasentladung einen hohen Anteil solcher Kohlenwasserstoffmoleküle und - radikale im Abgas erzeugt, die eine niedrigere Anspringtemperatur für eine katalytische Umsetzung besitzen, als Kohlenmonoxid oder als der restliche Abgasanteil.

20. Verfahren nach einem der Ansprüche 14 bis 19, **dadurch gekennzeichnet, daß** ein Katalysator (4) mit einer niedrigen Anspringtemperatur für ungesättigte oder teiloxidierte Kohlenwasserstoffe verwendet wird.

21. Vorrichtung zum Reinigen von Abgas, insbesondere Abgas von Verbrennungsmotoren, mit einem Abgasstrang (1,2), in dem ein das Abgas einer elektrischen Gasentladung unterwerfendes Plasmamodul (3) und ein Katalysator (4) vorhanden sind, in dem das Abgas in Kontakt mit katalytischem Material gelangt, insbesondere zur Durchführung des Verfahrens nach einem der vorhergehenden Ansprüche, **dadurch gekennzeichnet, daß** das Plasmamodul (3) im Abgasstrang (1,2) in einem Abstand strömungsmäßig vor dem Katalysator (4) angeordnet ist, der es gestattet, daß von der Gasentladung instabil angeregte Gasmoleküle in den Katalysator (4) gelangen.

22. Vorrichtung nach Anspruch 21, **dadurch gekennzeichnet, daß** der Katalysator (4) einen mit Edelmetall beschichteten wabenförmigen keramischen Träger aufweist.

23. Vorrichtung nach Anspruch 21 oder 22, **dadurch gekennzeichnet, daß** das Plasmamodul (3) und der Katalysator (4) einen als Baueinheit ausgebildeten Reaktor darstellen, der im Abgasstrang (1,2) nahe am Motor angeordnet ist.

## Claims

1. Process for cleaning exhaust gas, in particular oxygen-containing exhaust gas from internal combustion engines operated with a lean mixture and internal combustion engines whose exhaust gas is arranged to be a net oxidising exhaust gas by addition of oxygen under stoichiometric operation or operation with a rich mixture, which exhaust gas is subjected to electrical gas discharge and comes into contact with catalytic material, **characterised in that** a plasma module (3) effecting the electrical gas discharge is used in a position upstream of a catalytic converter (4), which comprises the catalytic material, in the direction of flow at such a distance that gas molecules, excited in such a way as to be unstable, flow with the exhaust gas into the catalytic converter (4).

2. Process as claimed in claim 1, **characterised in that** an oxygen-containing gas is added in such a quantity that the exhaust gas is a net oxidising gas.

3. Process as claimed in claim 1 or 2, **characterised in that** the gas molecules excited in such a way as to be unstable come into contact with the catalytically acting material.

4. Process as claimed in any one of claims 1 to 3, **characterised in that** chemical radicals of the oxygen-containing exhaust gas, its decomposition or reaction products are used in the catalytic converter (4) as the gas molecules which are excited in such a way as to be unstable.

5. Process as claimed in any one of the preceding claims 1 to 4, **characterised in that** a flow of exhaust gas taking place between the plasma module (3) and the catalytic converter (4) takes place at such a speed that the gas molecules excited in such a way as to be unstable reach the catalytic converter (4) while they are unstable.

6. Process as claimed in any one of the preceding claims 1 to 5, **characterised in that** the gas discharge is initiated up to ten seconds before and at the latest precisely with start-up of the internal combustion engine.

7. Process as claimed in any one of the preceding claims 1 to 6, **characterised in that** the gas discharge is terminated when an operating temperature of the catalytic converter (4) is reached which is **characterised by** an independent breakdown of pollutants.

8. Process as claimed in any one of the preceding claims 1 to 7, **characterised in that** at a catalytic converter temperature below 150°C the switched-on time of the plasma module (3) is greater than 50%.

9. Process as claimed in any one of the preceding claims 1 to 8, **characterised in that** at a catalytic converter temperature above 300°C the switched-on time of the plasma module (3) is less than 20%.

10. Process as claimed in any one of the preceding claims 1 to 9, **characterised in that** the gas discharge is initiated during engine operation if an exhaust gas composition is detected which is detrimental to the catalytic breakdown of pollutants.

11. Process as claimed in any one of the preceding claims 1 to 10, **characterised in that** the gas discharge is initiated during engine operation in the event of emission peaks.

12. Process as claimed in any one of the preceding claims 1 to 11, **characterised in that** the electrical power of the gas discharge is selected to be such that with an ambient temperature of 0°C and a relative air moisture content of 50% the time for raising the temperature of the catalytic converter (4) at the catalytic converter inlet to 250°C in the MVEG test is shortened to at least 80% with respect to an MVEG test without gas discharge.

13. Process as claimed in any one of the preceding claims 1 to 12, **characterised in that** the electrical power of the plasma module (3) does not exceed 800 Watts and is preferably 200 to 500 Watts.

14. Process as claimed in any one of the preceding claims 1 to 13, **characterised in that** the output of the gas discharge after reaching a predetermined light-off temperature (T0) is returned to zero during a predetermined time (t₂-t₁).

15. Process as claimed in any one of the preceding claims 1 to 14, **characterised in that** the electrical gas discharge is carried out in the sense of exciting a predetermined portion of hydrocarbon molecules in such a way as to be unstable.

16. Process as claimed in claim 15, **characterised in that** the predetermined portion is less than 70% of the total hydrocarbon molecules of the exhaust gas.

17. Process as claimed in claim 15 or 16, **characterised in that** the electrical gas discharge is controlled in the sense of excitation of hydrocarbon molecules with at least one double bond of two carbon atoms.

18. Process for cleaning exhaust gas, in particular as claimed in claim 15, **characterised in that** the electrical gas discharge is carried out in the sense of a breakdown of a predetermined portion of pollutants, wherein a high proportion of unstable molecules is formed from incomplete decomposition.

19. Process as claimed in any one of claims 14 to 18, **characterised in that** the electrical gas discharge produces a high proportion of such hydrocarbon molecules and hydrocarbon radicals in the exhaust gas, which have a lower light-off temperature for a catalytic conversion than carbon monoxide or than the remaining exhaust gas portion.

20. Process as claimed in any one of claims 14 to 19, **characterised in that** a catalytic converter (4) with a low light-off temperature is used for unsaturated or partially oxidised hydrocarbons.

21. Device for cleaning exhaust gas, in particular exhaust gas from internal combustion engines, having an exhaust gas train (1, 2), in which a plasma module (3), which subjects the exhaust gas to an electrical gas discharge, and a catalytic converter (4) are provided, in which catalytic converter the exhaust gas comes into contact with catalytic material, in particular to carry out the process as claimed in any one of the preceding claims, **characterised in that** the plasma module (3) is disposed in the exhaust gas train (1, 2) at a distance upstream of the catalytic converter (4) in the direction of flow, which catalytic converter makes it possible for gas molecules, which are excited so as to be unstable by the gas discharge, to enter the catalytic converter (4).

22. Device as claimed in claim 21, **characterised in that** the catalytic converter (4) has a honeycombed ceramic carrier coated with a noble metal.

23. Device as claimed in claim 21 or 22, **characterised in that** the plasma module (3) and the catalytic converter (4) constitute a reactor formed as a structural unit, which reactor is disposed in the exhaust gas train (1, 2) close to the engine.

## Revendications

1. Procédé pour purifier des gaz d'échappement, en particulier des gaz d'échappement contenant de l'oxygène, de moteurs à combustion interne à fonctionnement maigre et de moteurs à combustion interne dont les gaz d'échappement, lors d'un fonctionnement stoechiométrique ou riche, présentent un réglage d'oxydation nette grâce à l'adjonction d'oxygène, lesquels gaz d'échappement sont soumis à une décharge gazeuse électrique et viennent en contact avec une matière catalytique, **caractérisé en ce qu'**on utilise un module de plasma (3) qui provoque la décharge gazeuse électrique et qui est disposé en amont d'un catalyseur (4) présentant la matière catalytique, à une distance telle que les molécules gazeuses excitées de manière instable arrivent avec les gaz d'échappement dans le catalyseur (4).

2. Procédé selon la revendication 1, **caractérisé en ce qu'**un gaz contenant de l'oxygène est ajouté en quantité telle que les gaz d'échappement ont une action oxydante nette.

3. Procédé selon la revendication 1 ou 2, **caractérisé en ce que** les molécules gazeuses excitées de manière instable viennent en contact avec la matière à action catalytique.

4. Procédé selon l'une des revendications 1 à 3, **caractérisé en ce qu'**on utilise comme molécules gazeuses excitées de manière instable des radicaux chimiques des gaz d'échappement contenant de l'oxygène dont les produits de décomposition ou de réaction sont utilisés dans le catalyseur (4).

5. Procédé selon l'une des revendications 1 à 4 précédentes, **caractérisé en ce qu'**un écoulement de gaz d'échappement entre le module de plasma (3) et le catalyseur (4) a lieu à une vitesse telle que les molécules gazeuses excitées de manière instable atteignent le catalyseur (4) pendant leur durée d'instabilité.

6. Procédé selon l'une des revendications 1 à 5 précédentes, **caractérisé en ce que** la décharge gazeuse est activée jusqu'à dix secondes avant et au plus tard exactement en même temps que le démarrage du moteur à combustion interne.

7. Procédé selon l'une des revendications 1 à 6 précédentes, **caractérisé en ce que** la décharge gazeuse est désactivée lorsqu'on atteint une température de fonctionnement du catalyseur (4) qui est **caractérisée par** la décomposition automatique des substances polluantes.

8. Procédé selon l'une des revendications 1 à 7 précédentes, **caractérisé en ce que** la durée de mise en circuit du module de plasma (3), en présence d'une température de catalyseur inférieure à 150°C, est supérieure à 50 %.

9. Procédé selon l'une des revendications 1 à 8 précédentes, **caractérisé en ce que** la durée de mise en circuit du module de plasma (3), en présence d'une température de catalyseur supérieure à 300°C, est inférieure à 20 %.

10. Procédé selon l'une des revendications 1 à 9 précédentes, **caractérisé en ce que** la décharge gazeuse est activée pendant le fonctionnement du moteur au cas où on trouve une composition des gaz d'échappement qui nuit à la décomposition catalytique des substances polluantes.

11. Procédé selon l'une des revendications 1 à 10 précédentes, **caractérisé en ce que** la décharge gazeuse est activée pendant le fonctionnement du moteur en présence de valeurs d'émission maximales.

12. Procédé selon l'une des revendications 1 à 11 précédentes, **caractérisé en ce que** la puissance électrique de la décharge gazeuse est choisie pour qu'à une température ambiante de 0°C et une humidité relative de l'air de 50 %, la durée de montée en température du catalyseur (4) à l'entrée de celui-ci à 250°C, soit réduite à au moins 80 % selon le test MVEG par rapport à un test MVEG sans décharge gazeuse.

13. Procédé selon l'une des revendications 1 à 12 précédentes, **caractérisé en ce que** la puissance électrique du module de plasma (3) ne dépasse pas 800 watts et est de préférence de 200 à 500 watts.

14. Procédé selon l'une des revendications 1 à 13 précédentes, **caractérisé en ce que** la puissance de la décharge gazeuse est ramenée à zéro après qu'une température de démarrage prédéfinie (T0) a été atteinte pendant une durée prédéfinie (t₂-t₁).

15. Procédé selon l'une des revendications 1 à 14 précédentes, **caractérisé en ce que** la décharge gazeuse électrique est réalisée dans le sens d'une excitation instable d'une proportion prédéfinie de molécules d'hydrocarbures.

16. Procédé selon la revendication 15, **caractérisé en ce que** la proportion prédéfinie représente moins de 70 % de l'ensemble des molécules d'hydrocarbures des gaz d'échappement.

17. Procédé selon la revendication 15 ou 16, **caractérisé en ce que** la décharge gazeuse électrique est commandée dans le sens d'une excitation de molécules d'hydrocarbures avec au moins une liaison double de deux atomes de carbone.

18. Procédé pour purifier des gaz d'échappement, en particulier selon la revendication 15, **caractérisé en ce que** la décharge gazeuse électrique est réalisée dans le sens d'une décomposition d'une proportion prédéfinie de substances polluantes, étant précisé qu'une proportion élevée de molécules instables est formée à partir d'une décomposition incomplète.

19. Procédé selon l'une des revendications 14 à 18, **caractérisé en ce que** la décharge gazeuse électrique produit une proportion élevée de molécules d'hydrocarbures et de radicaux des hydrocarbures dans les gaz d'échappement, qui présentent pour une transformation catalytique une température de démarrage plus basse que le monoxyde de carbone ou que la proportion de gaz d'échappement restante.

20. Procédé selon l'une des revendications 14 à 19, **caractérisé en ce qu'**on utilise un catalyseur (4) avec une température de démarrage basse pour les hydrocarbures non saturés ou partiellement oxydés.

21. Dispositif pour purifier des gaz d'échappement, en particulier des gaz d'échappement de moteurs à combustion interne, comprenant une ligne d'échappement (1, 2) dans laquelle sont prévus un module de plasma (3) qui soumet les gaz d'échappement à une décharge gazeuse électrique, et un catalyseur (4) dans lequel les gaz d'échappement viennent en contact avec une matière catalytique, en particulier pour la mise en oeuvre du procédé selon l'une des revendications précédentes, **caractérisé en ce que** le module de plasma (3) prévu dans la ligne d'échappement (1, 2) est disposé en amont du catalyseur (4) à une distance qui permet aux molécules gazeuses excitées de manière instable par la décharge gazeuse d'arriver dans ledit catalyseur (4).

22. Dispositif selon la revendication 21, **caractérisé en ce que** le catalyseur (4) comporte un support céramique en nid d'abeille recouvert d'un métal précieux.

23. Dispositif selon la revendication 21 ou 22, **caractérisé en ce que** le module de plasma (3) et le catalyseur (4) constituent un réacteur conçu comme une unité de construction, qui est disposé près du moteur, dans la ligne d'échappement (1, 2).
